# EUROPÄISCHE PATENTSCHRIFT

(11) **EP 0 744 384 B1**
(45) Veröffentlichungstag und Bekanntmachung des Hinweises auf die Patenterteilung: **30.06.1999**
(21) Anmeldenummer: 96106167.8
(22) Anmeldetag: 19.04.1996
(51) Int. Cl.: C03C 8/06, C03C 3/066

(54) **Bleifreie Glasfritte für Keramikemails**
Lead-free glass frits for ceramic enamels
Frittes de verre exemptes de plomb pour des émaux céramiques

(30) Priorität: 22.05.1995 US 447055
(43) Veröffentlichungstag der Anmeldung: 27.11.1996
(73) Patentinhaber: CERDEC AKTIENGESELLSCHAFT KERAMISCHE FARBEN, D-60327 Frankfurt (DE)
(72) Erfinder: Ryan, Joseph W., Washington, Pennsylvania 15301 (US)

(56) Entgegenhaltungen:
- EP-A- 0 086 109
- EP-A- 0 267 154
- FR-A- 627 067

## Beschreibung

Die vorliegende Erfindung betrifft bleifreie Glasfritten zum Einsatz in Keramikemails.

### HINTERGRUND DER ERFINDUNG

In Keramikemails zum Einsatz gelangende Glasfritten sind üblicherweise niedrigschmelzende Gläser. Die für Keramikemails bestimmten Fritten enthalten normalerweise einen hohen Prozentsatz von Bleioxid und sind Bleiborsilikatgläser. Der niedrige Schmelzpunkt der Fritte ist in erster Linie auf das in dem Ansatz enthaltene Bleioxid zurückzuführen. Verschiedene Keramikemails enthalten auch Cadmiumoxid, das die Aufgabe hat, bei Cadmiumpigmente enthaltenden Emails Farbstabilität zu gewährleisten. Angesichts der durch die Giftigkeit von Blei- und Cadmiumoxiden bedingten Besorgnisse ist es wünschenswert, Fritten zu entwickeln, die keinen dieser beiden Bestandteile enthalten.

Abgesehen davon, daß in Keramikemails zum Einsatz gelangende Fritten einen niedrigen Schmelzbereich aufweisen, der nötig ist, um Verformung des mit dem betreffenden Email beschichteten Substrats zu vermeiden, müssen sie anderen Erfordernissen entsprechen. Eines der zusätzlichen Kriterien, denen entsprochen werden muß, besteht darin, daß die Wärmeausdehnung genau mit der Wärmeausdehnung des mit ihr beschichteten Substrats übereinzustimmen hat. Dies ist nötig, um die Bildung von Haarrissen in dem Email und Verringerung der Substratfestigkeit zu vermeiden.

Einer weiteren unerläßlichen Bedingung gemäß muß die Fritte eine gewisse Beständigkeit gegen Chemikalien aufweisen.

Dieses Erfordernis kann je nach der Anwendung der Fritte unterschiedlich sein und erstreckt sich auf Beständigkeit gegen saure und alkalische Medien. Bei der Entwicklung einer Fritte wird in der Regel eine Kompromißlösung angestrebt, die die Endmerkmale der Fritte berücksichtigt. Im allgemeinen weisen Fritten mit niedrigen Schmelzbereichen mittlere Werte der Chemikalienbeständigkeit und relativ hohe Wärmeausdehnungswerte auf, während bei Fritten mit hohen Schmelzbereichen die Beständigkeit überdurchschnittlich hoch bzw. ausgezeichnet ist und die Wärmeausdehnungswerte relativ niedrig sind.

Es wurden bisher mehrere bleifreie Frittenansätze offenbart.

Das US-Patent 4,554,258 offenbart z.B. Fritten, die Bi₂O₃, B₂O₃, SiO₂ und Alkalimetalloxide enthalten müssen und in denen das Wismutoxid notwendigerweise in hohen Konzentrationen vorhanden ist; das US-Patent 4,376,169 offenbart Fritten, die Alkalioxid B₂O₃, Al₂O₃, SiO₂, F, P₂O₃, ZnO und TiO₂ enthalten müssen, wobei deren Grenzwerte vom Standpunkt der Zusammensetzung kritisch sind; das US-Patent 4,446,241 offenbart Fritten, die Li₂O, B₂O₃ und SiO₂ sowie andere Oxide enthalten müssen; das US-Patent 4,537,862 offenbart Fritten, die B₂O₃, SiO₂, ZrO₂ und Seltenerdoxide enthalten müssen, wobei das Verhältnis des Gewichts von ZrO₂ zu dem Gewicht der Seltenerdoxide kritisch ist; und das US-Patent 4,590,171 offenbart Fritten, die Li₂O, Na₂O, BaO, Ba₂O₃, Al₂O₃, SiO₂, ZrO₂ und F enthalten müssen. Es wird auch auf die US-Patente 4,084,976 , 4,224,074 , 4,312,951 , 4,340,645 und 4,361,654 als zusätzliche Patente auf diesem allgemeinen Sektor hingewiesen.

Das US-Patent 5,342,810 behandelt zinkhaltige blei- und cadmiumfreie Glasfritten und deren Einsatz bei der Herstellung von bleifreien Emails, die bei Temperaturen von weniger als 630 °C gelagert werden können. Diese Fritten enthalten 31 - 50 Mol-% ZnO, 10 - 44 Mol-% SiO₂, 11 - 35 Mol-% B₂O₃ und 11 - 25 Mol-% Na₂O.

Das US-Patent 5,306,674 behandelt Glasfritten, die bei Temperaturen von etwa 1100 °F bis etwa 1300 °F gebrannt werden können. Diese Fritten müssen 20 - 40 Gew.-% ZnO, 20 - 32 Gew.-% B₂O₃, 10 - 30 Gew.-% SiO₂ und 4 - 12 Gew.-% Na₂O enthalten.

Durch niedrigen Kieselsäuregehalt gekennzeichnete bleifreie Glasfritten sind in dem US-Patent 5,252,521 beschrieben. Sie enthalten u.a. 35 - 77 Gew.-% Bi₂O₃, 10 - 30 Gew.-% B₂O₃ und 10 - 32 Gew.-% ZnO.

Das US-Patent 4,892,847 offenbart auf Wismut basierende Borsilicate mit 25 - 35 Gew.-% SiO₂, 25 - 45 Gew.-% Bi₂O₃, 10 - 25 Gew.-% B₂O₃, 4 - 19 Gew.-% R₂O und 0,3 - 8 Gew.-% ZrO₂/TiO₂.

Das US-Patent 5,308,803 offenbart Glasfritten mit 35 - 75 Mol-% SiO₂, 0,1 - 15 Mol-% Bi₂O₃, 0,1 - 10 Mol-% Al₂O₃, 1 - 30 Mol-% B₂O₃ und 5 - 30 Mol-% R₂O.

Zusätzlich offenbart das US-Patent 4,970,178 bleifreie Glasfritten mit guter chemischer Säurebeständigkeit, die 5 - 14 Mol-% Na₂O, 8 - 25 Mol-% ZnO, 6 - 13 Mol-% B₂O₃, 45 - 60 Mol-% SiO₂ und 0 - 10 Mol-% Bi₂O₃ enthalten.

Es ist somit ersichtlich, daß in den Ansätzen für Glasfritten die Typen und Konzentrationen der Oxidkomponenten unterschiedlich gewählt wurden, um annehmbare Frittenansätze zu erzielen. Zwar weisen solche Fritten, wie berichtet wird, verschiedene wünschenswerte Eigenschaften auf, sind jedoch nach wie vor in einem oder mehreren Leistungsbereichen nicht befriedigend.

### BESCHREIBUNG DER ERFINDUNG

Es ist daher das Hauptziel der Erfindung, bleifreie Glasansätze zu bieten, deren Leistungsmerkmale in weitem Umfang verbessert sind.

Überraschenderweise wurde festgestellt, daß bleifreie Glasansätze mit entsprechenden Anteilen von ZnO, SiO₂, Na₂O, B₂O₃, Bi₂O₃ und F⁻¹ den vorstehend genannten Zielen entsprechen. Bei den erfindungsgemäßen Fritten sind die Werte der Chemikalienbeständigkeit und der Wärmeausdehnung annehmbar. Besonders wichtig ist der Umstand, daß die Schmelzbereiche dieser Fritten außerordentlich niedrig sind. Die Fritten können daher unter den verschiedensten Brennbedingungen zum Einsatz gelangen und ergeben ausgereifte Emails. Außerdem können die Emails nach den verschiedensten Druckmethoden aufgetragen werden.

Die erfindungsgemäßen Glasfritten setzen sich im wesentlichen wie folgt zusammen (Angaben in Gew.-%):

| | |
|---|---|
| ZnO | 25-35 |
| SiO₂ | 10-17 |
| ZrO₂ | 0-2 |
| Al₂O₃ | 0-4 |
| Na₂O | 8-12 |
| B₂O₃ | 20-30 |
| Bi₂O₃ | 6-25 |
| F⁻¹ | 1-5 |

Die Fritten werden durch Mischen der in der Technik gut bekannten oxidbildenden Stoffe hergestellt. Es kann z.B. ein Gemenge von Oxid-, Nitrat- und Fluoridpulvern gründlich gemischt und bei einer Temperatur von etwa 1150 °C in einen Glasschmelzofen eingeführt werden, um eine flüssige Schmelze zu erzeugen. Die flüssige Schmelze wird dann schnell abgekühlt (abgeschreckt), indem man sie in Wasser gießt. Nach dem Abschrecken bilden sich kleine Glasbrocken mit Durchmessern von einigen Millimetern. Das Glas wird dann nach herkömmlichen Mahlverfahren zu einem feinen Pulver zermahlen.

Die erfindungsgemäßen Fritten können zum Herstellen verbesserter Glasemailmassen verwendet werden. Diese Glasemailmassen enthalten als wesentliche Bestandteile die Glasfritte und das Medium sowie wahlweise ein Pigment, wie z.B. ein Metalloxidpigment.

Das zu verwendende Medium wird vom Standpunkt der Endanwendung gewählt. Es ist wesentlich, daß die Teilchen in ausreichendem Maße in dem Medium suspendiert sind und daß das Medium beim Brennen der Masse vollkommen abbrennt. Die Medien sind typisch organischer Art und zu ihnen zählen auf Pine Oils, pflanzlichen Ölen, Mineralölen, Erdölfraktionen mit niedrigem Molekulargewicht, Tridecylalkohol und ähnlichen Stoffen basierende Präparate. Die Medien können durch zähflüssige Harze wie Vinylharze, Lösungsmittel, Filmbildner wie auf Cellulose basierende Materialien und ähnliche Stoffe modifiziert sein.

Die wahlweisen Metalloxidpigmente sind Fachleuten gut bekannt. Zu den annehmbaren Oxiden zählen z.B. solche von Chrom, Kobalt, Eisen, Nickel, Kupfer, Mangan und ähnlichen Stoffen. Während die letztgenannten Metalloxide bevorzugte schwarze Spinellpigmente bilden, werden auch andere Metalloxide zur Erzeugung anderer Pigmente und anderer Farben in Betracht gezogen. Der Pigmentbestandteil entspricht im allgemeinen 10 bis 40 Gew.-% der betreffenden Glasfritte.

Methoden für den Auftrag der Emailbeschichtungen sind Fachleuten gut bekannt. Die dispergierten Massen können nach Verfahren, wie Siebdruck, Abziehbildtechnik, Aufsprühen, Pinselauftrag, Walzenbeschichtung und dergleichen aufgetragen werden. Zum Auftragen der Masse auf Glassubstrate wird Siebdruck bevorzugt.

Glasemailfarben werden ebenfalls mit Silbermetall angesetzt, um z.B. als Enteisungsschaltungen für Heck- und Windschutzscheiben von Kraftfahrzeugen dienende leitfähige Beschichtungen zu erzeugen. Auf den Anwendungssektoren dieser Art bilden Farbbeständigkeit, Haftfestigkeit, Lötbarkeit, Ausbleiben von Silberabwanderung und Abriebbeständigkeit unerläßliche Leistungsmerkmale. Man beachte, daß die die erfindungsgemäßen Fritten enthaltenden Massen zum Einsatz in Verbindung mit solchen leitfähigen Beschichtungen für die vorstehend angeführten Leistungsbereiche in Frage kommen. Werden die leitfähigen Beschichtungen in überlappender Beziehung mit den die erfindungsgemäßen Fritten enthaltenden Emails aufgetragen, so erstrecken sich die nach Wärmebehandlung beobachteten Leistungsverbesserungen auf hohe Beständigkeit gegen das Abwandern von Silber in das Email, erhebliche Verringerung unerwünschter Blautrübung der Sammelschiene (der die Enden einzelner waagerecht verlaufender leitfähiger Elemente der Enteisungsschaltung verbindenden Schiene) sowie die Haltbarkeit von Lötanschlüssen.

Nachstehend werden des weiteren verschiedene Ausführungsformen der Erfindung veranschaulicht. Bei diesen Ausführungsformen wird von bekannten Methoden Gebrauch gemacht, um die entsprechenden Gemenge der Glasmassen zu mischen, diese im allgemeinen etwa 45 Minuten lang bei einer Temperatur von etwa 1150 °C zu schmelzen und dann die Massen zu fritten.

Zwecks Prüfung werden 4,0 g der Glasfritte zu 1,5 cm³ eines auf Pine Oil basierenden Mediums zugesetzt und die erzielte Dispersion mit einer Naßdicke von 2 Mil (0,002 Zoll) nach dem Siebdruckverfahren auf Glasplättchen aufgetragen. Die Glasplättchen werden bei mehreren Temperaturen gebrannt, um die "Einbrenntemperatur" zu bestimmen. Die Einbrenntemperatur ist die Temperatur, bei der das Glas genügend Zeit hat, um innerhalb einer Einbrennzeit von 15 Minuten zu fließen und eine glänzende, glatte Oberfläche zu bilden.

Die Säurebeständigkeit wurde im Einklang mit ASTM C724-91 unter Verwendung einer Lösung ausgewertet, die 10 Gew.-% Zitronensäure enthielt. Eingebrannte Proben werden der Einwirkung der 10-%igen Zitronensäurelösung 15 Minuten lang bei Raumtemperatur unterzogen, worauf sie im Einklang mit der folgenden Skala eingestuft werden:
- Stufe 1:: Kein Angriff bemerkbar
- Stufe 2:: Bei Betrachtung unter einem Winkel von 45° ist auf der freiliegenden Oberfläche Irisieren oder ein sichtbarer Fleck bemerkbar, nicht aber bei Betrachtung unter Winkeln von weniger als 30°
- Stufe 3:: Ein deutlicher Fleck, der keine Unschärfe reflektierter Bilder bedingt und bei Betrachtung unter Winkeln von weniger als 30° sichtbar ist
- Stufe 4:: Ein deutlicher Fleck, bei dem die Farbänderung stark ausgeprägt ist oder die Oberfläche stark irisiert und der u.U. Unschärfe reflektierter Bilder bedingen kann, ist bei Betrachtung unter Winkeln von weniger als 30° sichtbar
- Stufe 5:: Oberfläche trüb oder matt und in gewissen Fällen kalkiger Beschlag
- Stufe 6:: Erhebliche Ablösung des Emails und Anzeichen der Porenbildung
- Stufe 7:: Vollständige Ablösung des Emails in dem freiliegenden Bereich

Die Wärmeausdehnungskoeffizienten der Fritten wurden zwischen 25 °C und 325 °C in Einheiten von 10⁻⁷/°C gemessen.

### Beispiele

Typische erfindungsgemäße Frittenansätze und einige Leistungsmerkmale der Glasfritten gehen aus der nachstehenden Tabelle hervor:

| Bestandteil | Ansätze (Gew.-%) | | |
|---|---|---|---|
| | 1 | 2 | 3 |
| ZnO | 33,9 | 31,6 | 29,6 |
| SiO₂ | 14,9 | 13,9 | 13,0 |
| ZrO₂ | 0,9 | 0,9 | 0,8 |
| Al₂O₃ | 3,3 | 3,0 | 2,8 |
| Na₂O | 11,1 | 10,3 | 9,7 |
| B₂O₃ | 26,0 | 24,2 | 22,7 |
| Bi₂O₃ | 7,3 | 13,6 | 19,1 |
| F⁻¹ | 2,6 | 2,5 | 2,3 |
| Einbrenntemperatur (°C) | 576 | 565 | 559 |
| Säurebeständigkeit, ASTM C-724-91 | 5 | 5 | 5 |
| Wärmeausdehnung (25-325 °C) | 86 | 83 | 87 |

Diese Ergebnisse beweisen die ausgezeichneten Leistungsmerkmale der erfindungsgemäßen Glasfritten und insbesondere die niedrigen Kennwerte der Einbrenntemperaturen sowie die ausreichend hohen Kennwerte der Säurebeständigkeit und Wärmeausdehnung.

## Patentansprüche

1. Bleifreie Glasfritte mit der folgenden Zusammensetzung (Angaben in Gew.-%):
| | |
|---|---|
| ZnO | 25-35 |
| SiO₂ | 10-17 |
| ZrO₂ | 0-2 |
| Al₂O₃ | 0-4 |
| Na₂O | 8-12 |
| B₂O₃ | 20-30 |
| Bi₂O₃ | 6-25 |
| F⁻¹ | 1-5 |

2. Bleifreie Glasfritte nach Anspruch 1, die sich im wesentlichen aus 33,9 Gew.-% ZnO, 14,9 Gew.-% SiO₂, 0,9 Gew.-% ZrO₂, 3,3 Gew.-% Al₂O₃, 11,1 Gew.-% Na₂O, 26,0 Gew.-% B₂O₃, 7,3 Gew.-% Bi₂O₃ und 2,6 Gew.-% F⁻¹ zusammensetzt.

3. Bleifreie Glasfritte nach Anspruch 1, die sich im wesentlichen aus 31,6 Gew.-% ZnO, 13,9 Gew.-% SiO₂, 0,9 Gew.-% ZrO₂, 3,0 Gew.-% Al₂O₃, 10,3 Gew.-% Na₂O, 24,2 Gew.-% B₂O₃, 13,6 Gew.-% Bi₂O₃ und 2,5 Gew.- % F⁻¹ zusammensetzt.

4. Bleifreie Glasfritte nach Anspruch 1, die sich im wesentlichen aus 29,6 Gew.-% ZnO, 13,0 Gew.-% SiO₂, 0,8 Gew.-% ZrO₂, 2,8 Gew.-% Al₂O₃, 9,7 Gew.-% Na₂O, 22,7 Gew.-% B₂O₃, 19,1 Gew.-% Bi₂O₃ und 2,3 Gew.-% F⁻¹ zusammensetzt.

5. Keramikemailmasse, enthaltend eine Glasfritte und ein Medium dafür,
dadurch gekennzeichnet,
daß die Glasfritte einem der Ansprüche 1 bis 4 entspricht.

6. Eine Keramikemailmasse nach Anspruch 5,
dadurch gekennzeichnet,
daß sie zusätzlich ein Metalloxidpigment enthält.

7. Glassubstrat,
dadurch gekennzeichnet,
daß auf ihm eine Keramikemailmasse nach einem der Ansprüche 5 oder 6 eingebrannt ist.

8. Glassubstrat nach Anspruch 7,
dadurch gekennzeichnet,
daß das Substrat ein Glas für den Kraftwagenbau ist.

## Claims

1. Lead-free glass frit of the following composition (values stated in wt.%):
| | |
|---|---|
| ZnO | 25-35 |
| SiO₂ | 10-17 |
| ZrO₂ | 0-2 |
| Al₂O₃ | 0-4 |
| Na₂O | 8-12 |
| B₂O₃ | 20-30 |
| Bi₂O₃ | 6-25 |
| F⁻¹ | 1-5 |

2. Lead-free glass frit according to claim 1, which is substantially of the composition 33.9 wt.% ZnO, 14.9 wt.% SiO₂, 0.9 wt.% ZrO₂, 3.3 wt.% Al₂O₃, 11.1 wt.% Na₂O, 26.0 wt.% B₂O₃, 7.3 wt.% Bi₂O₃ and 2.6 wt.% F⁻¹.

3. Lead-free glass frit according to claim 1, which is substantially of the composition 31.6 wt.% ZnO, 13.9 wt.% SiO₂, 0.9 wt.% ZrO₂, 3.0 wt.% Al₂O₃, 10.3 wt.% Na₂O, 24.2 wt.% B₂O₃, 13.6 wt.% Bi₂O₃ and 2.5 wt.% F⁻¹.

4. Lead-free glass frit according to claim 1, which is substantially of the composition 29.6 wt.% ZnO, 13.0 wt.% SiO₂, 0.8 wt.% ZrO₂, 2.8 wt.% Al₂O₃, 9.7 wt.% Na₂O, 22.7 wt.% B₂O₃, 19.1 wt.% Bi₂O₃ and 2.3 wt.% F⁻¹.

5. Ceramic enamel composition containing a glass frit and a medium for the frit,
characterised in that
the glass frit is in accordance with one of claims 1 to 4.

6. A ceramic enamel composition according to claim 5,
characterised in that
it additionally contains a metal oxide pigment.

7. Glass substrate,
characterised in that
a ceramic enamel composition according to one of claims 5 or 6 has been fired thereon.

8. Glass substrate according to Claim 7,
characterised in that
the substrate is a glass for motor vehicle construction.

## Revendications

1. Frittes de verre exemptes de plomb ayant la composition suivante (données en % en poids) :
| | |
|---|---|
| ZnO | 25-35 |
| SiO₂ | 10-17 |
| ZrO₂ | 0-2 |
| Al₂O₃ | 0-4 |
| Na₂O | 8-12 |
| B₂O₃ | 20-30 |
| Bi₂O₃ | 6-25 |
| F⁻¹ | 1-5 |

2. Fritte de verre exempte de plomb selon la revendication 1, qui se compose essentiellement de :
33,9 % en poids de ZnO, 14,9 % en poids de SiO₂, 0,9 % en poids de ZrO₂, 3,3 % en poids d'Al₂O₃, 11,1% en poids de Na₂O, 26,0 % en poids de B₂O₃, 7,3 % en poids de Bi₂O₃ et 2,6 % en poids de F⁻¹

3. Fritte de verre exempte de plomb selon la revendication 1,
qui se compose essentiellement de :
31,6 % en poids de ZnO, 13,9 % en poids de SiO₂, 0,9 % en poids de ZrO₂, 3,0 % en poids d'Al₂O₃, 10,3 % en poids de Na₂O, 24,2 % en poids de B₂O₃, 13,6 % en poids de Bi₂O₃ et 2,5 % en poids de F⁻¹.

4. Fritte de verre exempte de plomb selon la revendication 1,
qui se compose essentiellement de :
29,6 % en poids de ZnO, 13,0 % en poids de SiO₂, 0,8 % en poids de ZrO₂, 2,8 % en poids de Al₂O₃, 9,7 % en poids de Na₂O, 22,7 % en poids de B₂O₃, 19,1% en poids de Bi₂O₃ et 2,3 % en poids de F⁻¹.

5. Masse d'émail céramique, contenant une fritte de verre et un milieu pour cela,
caractérisée en ce que
la fritte de verre correspond à une des revendications 1 à 4.

6. Masse d'émail céramique selon la revendication 5,
caractérisée en ce qu'
elle contient additionnellement un pigment d'oxyde métallique.

7. Substrat de verre,
caractérisé en ce qu'
une masse d'émail céramique selon une des revendications 5 ou 6, est cuite sur lui.

8. Substrat de verre selon la revendication 7,
caractérisé en ce que
le substrat est un verre destiné à la construction de véhicules automobiles.
